# EUROPÄISCHE PATENTSCHRIFT

(11) **EP 3 812 340 B1**
(45) Veröffentlichungstag und Bekanntmachung des Hinweises auf die Patenterteilung: **06.12.2023**
(21) Anmeldenummer: 20202020.2
(22) Anmeldetag: 15.10.2020
(51) Int. Cl.: B66F 9/06, B66F 9/075

(54) **FLURFÖRDERZEUG, EINGERICHTET FÜR DEN FAHRERLOSEN, AUTONOM AGIERENDEN BETRIEB**
INDUSTRIAL TRUCK EQUIPPED FOR DRIVERLESS AUTONOMOUS OPERATION
CHARRIOT DE MANUTENTION, ÉQUIPÉ POUR UN FONCTIONNEMENT SANS CONDUCTEUR ET AUTONOME

(30) Priorität: 21.10.2019 DE 102019216181
(43) Veröffentlichungstag der Anmeldung: 28.04.2021
(73) Patentinhaber: Robert Bosch GmbH, 70442 Stuttgart (DE)
(72) Erfinder: Roethling, Frank, 70469 Stuttgart (DE); Brodt, Markus, 70597 Stuttgart (DE); Schild, Johannes, 74232 Abstatt (DE)

(56) Entgegenhaltungen:
- WO-A1-2019/002784
- DE-A1-102017 220 359
- DE-U1- 29 724 786
- US-A1- 2016 075 542

## Beschreibung

Die vorliegende Erfindung betrifft ein Flurförderzeug (Automated Guided Vehicle, AGV), eingerichtet für den fahrerlosen, autonom agierenden Betrieb für eine zu transportierende Last. Insbesondere findet die Erfindung Anwendung bei einem Roboterfahrzeug für den Transport von Lasten. Umfasst sind auch hebende Flurförderzeuge und nicht stapelnde Hubwagen sowie entsprechende Kombinationen. Mit fortschreitender Automatisierungstechnik wird der Handhabung von Lasten zunehmend Bedeutung beigemessen.

Die Schrift US 2016 075 542 A1 offenbart einen Gabelstapler mit einer Sensorstruktur die überwacht, ob eine Bewegung der Schlittenanordnung des Gabelstablers zu einem Kontakt der Last und einem Ausleger des Gabelstablers führen würde. Ist der Fall wird eine Bewegung der Schlittens durch die Fahrzeugsteuerung verhindert. Dieses Dokument offenbart den Oberbegriff von Anspruch 1.

Die Schrift DE 297 24 786 U1 auf ein fahrerloses Transportfahrzeug zum Handhaben von Lasten. Im weiteren Umfeld werden Hindernisse erfasst, z.B. mittels Ultraschall-, Infrarot- oder Lasersensoren. Es wird eine Notbremsung durchgeführt, sollten mechanische Stoßfänger des Fahrzeugs mit einem Hindernis in Kontakt kommen. Bei einem autonomen Transport kann die Last durch eine mechanische Klemmung oder zusätzliche Halte- bzw. Umhausungsmaßnahmen gegen Verrutschen oder gar Verlust während des Transports gesichert werden. Bei einer Unterbrechung des Transportvorgangs (z. B. durch Stromausfall), kann jedoch der Fall eintreten, dass die (elektronisch gespeicherten) Information über den Beladungszustand des AGV, insbesondere einer dem AGV zugeordneten Hubplattform, verloren gehen, wodurch ein Abbruch des Transportvorgangs und/oder ein aufwändiges Zurücksetzen auf einen Initialzustand notwendig wird.

Hiervon ausgehend ist es Aufgabe der vorliegenden Erfindung, ein Flurförderzeug, eingerichtet für den fahrerlosen, autonom agierenden Betrieb für eine zu transportierende Last zu schaffen, das die genannten Nachteile lindert oder sogar vermeidet. Insbesondere sollen ein Verzicht auf Klemmung der Last oder zusätzliche Halte- bzw. Umhausungsmaßnahmen und eine automatische Wiederaufnahme des Transportvorgangs nach einer Unterbrechung des Transportvorgangs (z. B. durch Stromausfall) erreicht werden.

Diese Aufgaben werden gelöst mit einem Flurförderzeug gemäß dem unabhängigen Patentanspruch. Weitere Ausgestaltungen der Erfindung sind in den abhängigen Patentansprüchen angegeben. Es ist darauf hinzuweisen, dass die Beschreibung, insbesondere im Zusammenhang mit den Figuren weitere Einzelheiten und Weiterbildungen der Erfindung ausführen, die mit den Merkmalen aus den Patentenansprüchen kombinierbar sind.

Hierzu trägt ein Flurförderzeug, eingerichtet für den fahrerlosen, autonom agierenden Betrieb für eine zu transportierende Last bei, umfassend zumindest:
- ein Steuerungssystem, das das Flurförderzeug steuert und lenkt,
- eine Auswerteeinheit, die ein Signal zum Anhalten des Flurförderzeugs erzeugt,
wobei eine Detektoreinrichtung zur Erkennung der Anordnung der Last und/oder einer Hubplattform an das Steuerungssystem angeschlossen ist. Bei einer Abweichung der erkannten von einer vorgegebenen Anordnung der Last und/oder bei einem unerwarteten Absenken der Hubplattform erfolgt das Anhalten des Flurförderzeugs automatisch.

Das hier vorgestellte Flurförderzeug hat unter anderem den Vorteil, dass die zu transportierende Last nach dem Beladevorgang frei auf einer Hubplattform des AGV aufliegen kann. Der Verlust der Last während der Fahrt durch Verrutschen auf der Hubplattform und/oder durch unerwartetes Absenken der Hubplattform wird vermieden, indem das AGV sicher gestoppt wird, wenn eine solche Situation mittels eines sicheren Lastsensors (Dolly Detection Sensor, DDS) ermittelt wird.

Ein fahrerloses Flurförderzeug kann ein kraftgetriebenes Fahrzeug ggf. einschließlich jeglicher Anhänger sein, das dazu bestimmt ist, selbständig zu fahren. Dafür kann das Flurförderzeug mit einem Leitsystem im Boden oder der Umgebung zusammenwirken, welches die Fahrrouten vorgibt.

"Last" bedeutet ein zu handhabendes Objekt, einschließlich dessen Masse, Abmessungen, Zustand und/oder Anordnung. Die Last kann (nur) aus einem Ladegut bestehen. Die Last kann auch das Ladegut und eine Transporteinrichtung für das Ladegut, z. B. einen Transportwagen, eine Palette, einen Bodenroller, etc. umfassen. Unter einer "Lasthandhabung", die von dem Flurförderzeug ausgeführt werden kann, werden insbesondere Heben, Senken, Lastübergabe und/oder Lastbehandlung verstanden.

Insbesondere kann das fahrerlose Flurförderzeug eingerichtet sein, einen Transportwagen (Dolly) mittels einer (ggf. fest installierten) Hubplattform zu verfahren. Das Flurförderzeug kann beispielsweise teilweise unter den Transportwagen fahren, den Transportwagen aufnehmen und etwas über den Boden anheben, insbesondere derart, dass der Transportwagen keinen (direkten) Kontakt mehr mit dem Boden hat, wenn das Flurförderzeug verfährt. Hat das Flurförderzeug seine Zielposition erreicht, kann die Hubplattform wieder abgesenkt und der Transportwagen abgestellt werden. Die Hubplattform ist insbesondere so gestaltet und eingerichtet, dass diese mit einem oder mehreren vorgegebenen Transportwagen gekoppelt werden kann. Das Flurförderzeug kann mittels der Hubplattform beispielsweise den Transportwagen um mindestens 10 Zentimeter anheben, bevorzugt bis zu 20 Zentimeter, so dass dieses auch Steigungen von bis zu 6% abfahren kann, ohne dass die Räder des Transportwagens den Boden erreichen.

Das Steuerungssystem hat eine automatische Einrichtung zum Inhalt, die das Flurförderzeug und seine zugehörigen Einrichtungen steuert (z.B. aktiviert/deaktiviert) und (ggf. sensorisch überwacht) lenkt. Das System des fahrerlosen Flurförderzeugs umfasst das Steuerungssystem, das Teil des Flurförderzeugs und/oder davon getrennt sein kann. Das Steuerungssystem kann eine Recheneinheit umfassen, die im oder am Flurförderzeug vorgesehen ist.

Die Auswerteeinheit kann mit einem Sensorsystem (z.B. der Detektoreinrichtung) bevorzugt elektrisch und datenleitend verbunden und eingerichtet, dessen Signale zu verarbeiten. Die Auswerteeinheit ist insbesondere eingerichtet, eine Analyse der Daten der Detektoreinrichtung vorzunehmen, sodass die Last eindeutig bezüglich ihrer Lage/Position im Ladebereich bzw. auf der Hubplattform des Flurförderzeugs erfasst bzw. bestimmt werden kann. Die in der Auswerteeinheit bestimmte Lage kann mit vorgegebenen (zum Beispiel gespeicherten und/oder eingestellten) Parametern abgeglichen oder beeinflusst werden, wobei dann auch ein Regelungssignal an die Steuerung übermittelt wird und dabei der Betrieb des Flurförderzeugs durch die Auswerteeinheit beeinflusst werden kann. Die Auswerteeinheit kann ein separates (elektronisches) Aggregat sein, es ist aber auch möglich, dass die Auswerteeinheit Teil des Steuerungssystems zur Ansteuerung des Flurförderzeugs selbst ist. Die (mindestens) eine datenleitende Verbindung zwischen Auswerteeinheit und Steuergerät sowie dem Sensorsystem kann kabelgebunden oder kabellos realisiert sein.

Die Detektoreinrichtung ist eingerichtet, ein Signal zu erzeugen, das repräsentativ für den Beladungszustand und/oder eine Veränderung des Beladungszustands ist. Der Beladungszustand und/oder eine Veränderung des Beladungszustands kann insbesondere auch "mittelbar" dadurch erfasst werden, dass eine Veränderung der Position der Hubplattform festgestellt wird. Dieses Signal kann von der Auswerteeinheit interpretiert werden und eine Anweisung an das Steuerungssystem veranlassen, durch das das Flurförderzeug mittels eines Bremssystems unter den vorgegebenen Betriebsbedingungen angehalten werden kann, insbesondere bevor die Last bzw. der Transportwagen den Ladebereich (teilweise) verlässt und/oder in Kontakt mit dem Boden kommen. Die Detektoreinrichtung ist weiterhin eingerichtet, bei einem unerwarteten Absenken der Hubplattform (insbesondere auch während der Fahrt des Flurförderzeugs) ein Signal zum Anhalten des Flurförderzeugs zu erzeugen. Die Detektoreinrichtung zur Erkennung der Anordnung der Last, insbesondere eines Verrutschens der Last und/oder zur Positionierung der Last, ist an die Auswerteeinheit und/oder Steuerungseinrichtung angeschlossen.

Die Detektoreinrichtung kann insbesondere eingerichtet sein, eine einmal eingerichtete, erfasste und/oder vorbestimmte Anordnung der Last direkt und/oder mittelbar anhand einer Zustandsgröße der (aktivierten) Hubplattform zu überwachen, zu speichern und/oder mit einer (gespeicherten) Referenzposition zu vergleichen. Dies kann auch mit Einschaltung der Auswerteeinheit erfolgen. Bei einer Abweichung der erwarteten bzw. vorgegebenen Anordnung der Last und/oder z.B. bei einem unerwünschten Absenken der Hubplattform kann mittels der Auswerteeinheit das Anhalten des Flurförderzeugs automatisch (unmittelbar bzw. ohne aktiven Eingriff von Personen) erfolgen.

Bevorzugt umfasst das Steuerungssystem eine Steuereinheit für die gewünschte Fahrtrichtung und die Geschwindigkeit, eine Steuereinheit für die Bewegung und eine Steuereinheit für die Sicherheit des Flurförderzeugs. Eine erste Steuereinheit (Robot Control Unit, RCU), eine zweite Steuereinheit (Motion Control Unit, MCU) und eine dritte Steuereinheit (Safety Control Unit, SCU) sind bevorzugt Bestandteil des Steuerungssystems.

Mit Vorteil umfasst das Steuerungssystem mindestens einen stromausfallsicheren (Daten-)Speicher zum (zeitweisen) Speichern der erkannten bzw. erfassten Anordnung der Last und/oder der Hubplattform. Beim Beladevorgang kann der Zustand der Beladung und/oder der Hubplattform in dem stromausfallsicheren Speicher gespeichert werden. Die Daten des Speichers können zumindest über den gesamten Transportvorgang die Überwachung der Ladung sicherstellen, weil diese als Referenzdaten stets, insbesondere auch nach einem kurzzeitigen Stromausfall, verfügbar sind. Der Speicher ist bevorzugt so verschaltet, dass der Zustand der Beladung selbst bei Wiederinbetriebnahme nach einem Stromausfall direkt wieder abrufbar ist und somit ein Zurücksetzen auf einen Initialzustand vermieden und der Transportvorgang automatisch weitergeführt werden kann.

Vorzugsweise ist der Speicher ein sicheres (insbesondere nicht-flüchtiges) Flipflop.

Ein Flipflop ist eine elektronische Schaltung, die zwei stabile elektrische Zustände hat und durch entsprechende Eingangssignale von einem Zustand in einen anderen geschaltet werden kann (auch bistabile Kippstufe genannt).

Zweckmäßig ist das Flipflop eingerichtet, beim und/oder kurz nach dem Beladevorgang des Flurförderzeugs die Anordnung der Last und/oder der Hubplattform zu speichern. Dies kann beispielsweise über eine Abfrage der relevanten Sensoren und Schaltung des Flipflops in Abhängigkeit der Abfrageergebnisse erfolgen.

Bevorzugt ist das Flipflop eingerichtet, bei Wiederinbetriebnahme nach einem Stromausfall die Anordnung der Last und/oder der Hubplattform direkt verfügbar zu machen und/oder wieder zu speichern und den Transportvorgang automatisch weiterzuführen.

Mit Vorteil umfasst die Detektoreinrichtung einen unteren Hubplattformsensor und einen oberen Hubplattformsensor. Der untere Hubplattformsensor kann untere (ggf. inaktive) Lage der Hubplattform erfassen. Der obere Hubplattformsensor kann obere (ggf. aktive) Lage der Hubplattform erfassen. Damit kann eine eindeutige Lageermittlung für die Hubplattform vorgenommen werden.

Vorzugsweise sind der untere Hubplattformsensor und der obere Hubplattformsensor an die dritte Steuereinheit (SCU) angeschlossen.

Zweckmäßig ist ein Lastsensor zur Erkennung der Anordnung der Last an die dritte Steuereinheit (SCU) angeschlossen. Es ist auch möglich, dass das das Signal des Lastsensors kumulativ oder alternativ zu dem Signal eines oberen Hubplattformsensors genutzt wird.

Bevorzugt ist der Lastsensor ein induktiver Näherungssensor. Induktive Näherungssensoren arbeiten mit einem magnetischen Feld, das sich vor dem Sensor in einem offenen Magnetkreis ausbildet. Die Annäherung eines (leitend) metallischen Objektes (wie z. B. der Transportwagen) beruht auf einer zu sensierenden Abschwächung des Magnetfeldes. Der Näherungssensor arbeitet als berührungslos und kann ein Schaltsignal ausgeben, wenn die Magnetfeldveränderung festgestellt wird.

Mit Vorteil ist der Lastsensor am Ladebereich des Flurförderzeugs angeordnet.

Vorzugsweise umfasst das Steuerungssystem eine Auswerteeinheit. Zweckmäßig ist die Auswerteeinheit in das Steuerungssystem integriert.

Der Verlust der Last während der Fahrt durch Verrutschen auf der Hubplattform oder durch unerwartetes Absenken der Hubplattform wird insbesondere dadurch vermieden, dass das AGV sicher gestoppt wird. Beim Beladevorgang wird der Zustand der Beladung bevorzugt durch ein sicheres Flipflop gespeichert, das über den gesamten Transportvorgang die Überwachung der Ladung sicherstellt. Ein Zurücksetzen des Flipflops erfolgt erst nach Abschluss des Abladevorgangs durch Aktivierung des unteren Hubplattformsensors.

Der Verlust der Last während der Fahrt durch unerwartetes Absenken der Hubplattform durch einen mechanischen oder elektrischen Fehler wird vermieden, indem das AGV sicher gestoppt wird, wenn sich die Hubplattform unerwartet senkt (sicherer Zustand des oberen Hubplattformsensors). Ein gesteuertes Absenken der Hubplattform wird nach Aufnahme einer Last erst nach einer sicher überwachten Rückwärtsfahrt in einen Abladebereich freigegeben.

Bei einem Roboter-Transportfahrzeug sind der Zustand der Hubplattform und der Last wichtige Sicherheitsaspekte. Daher wird bei dem hier vorgestellten Flurförderzeug ein stromausfallsicherer Speicher für den Beladungszustand vorgesehen. Weitere vorteilhafte Merkmale sind die "Benutzung" des Speichers (setzen, zurücksetzen, Fehlerlogik, Logik zur Ansteuerung der Hubplattform in Abhängigkeit vom Speicherinhalt).

Das Flurförderzeug kann demnach auch mit einem System zur Datenverarbeitung ausgeführt sein, umfassend Mittel zur Ausführung der vorstehend genannten Schritte des Verfahrens mit der Detektoreinrichtung. Insbesondere ist das System eingerichtet, mittels der Detektoreinrichtung eine Anordnung der Last und/oder der Hubplattform festzustellen, insbesondere unter Einsatz der Auswerteeinheit, wobei
- die Auswerteeinheit eine Abweichung der Anordnung der Last und/oder ein Absenken der Hubplattform erkennt, und
- bei Feststellen einer (vorgebbar) unzulässigen Abweichung das (unverzügliche) Stoppen der Fahrt des Flurförderzeugs veranlasst wird.

Vorsorglich sei darauf hingewiesen, dass die Bezeichnung von Elementen mit Zahlwörtern ("erst, "zweite" ...) regelmäßig nur zur Unterscheidung erfolgt und keine Abhängigkeit oder Reihenfolge der Elemente vorgeben muss. Mit Blick auf die Sensoren bedeutet dies beispielsweise, dass deren Anbringung (stationär, mitfahrend) und/oder Ort (an einem Träger, Greifer, etc.) unabhängig von der Bezeichnung frei bzw. entsprechend den technischen Gegebenheiten wählbar ist.

Die Erfindung und das technische Umfeld werden nachfolgend anhand von Figuren näher erläutert. Dabei sind gleiche Bauteile mit gleichen Bezugszeichen gekennzeichnet. Die Darstellungen sind schematisch nicht zur Veranschaulichung von Größenverhältnissen vorgesehen. Die mit Bezug auf einzelne Details einer Figur angeführten Erläuterungen sind extrahierbar mit Sachverhalten aus anderen Figuren oder der vorstehenden Beschreibung frei kombinierbar, es sei denn, dass sich für einen Fachmann zwingend etwas anderes ergibt, bzw. eine solche Kombination explizit untersagt wird. Es zeigen schematisch:
- Fig. 1:: eine Draufaufsicht auf ein fahrerloses, autonom agierendes Flurförderzeug mit einem Steuerungssystem und einer Detektoreinrichtung;
- Fig. 2:: ein Blockschaltbild mit dem Steuerungssystem, an das die Detektoreinrichtung und ein stromausfallsicherer Speicher angeschlossen sind;
- Fig. 3:: eine Seitenansicht auf das Flurförderzeug gemäß Figur 1 mit beladener Last und einem Sensorsystem;
- Fig. 4:: ein Schaltbild für eine erste Logikschaltung; und
- Fig. 5:: ein Schaltbild für eine zweite Logikschaltung.

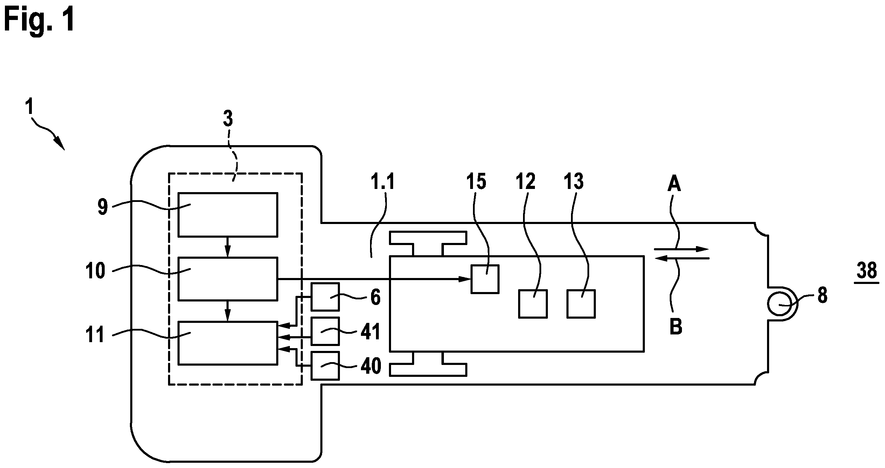

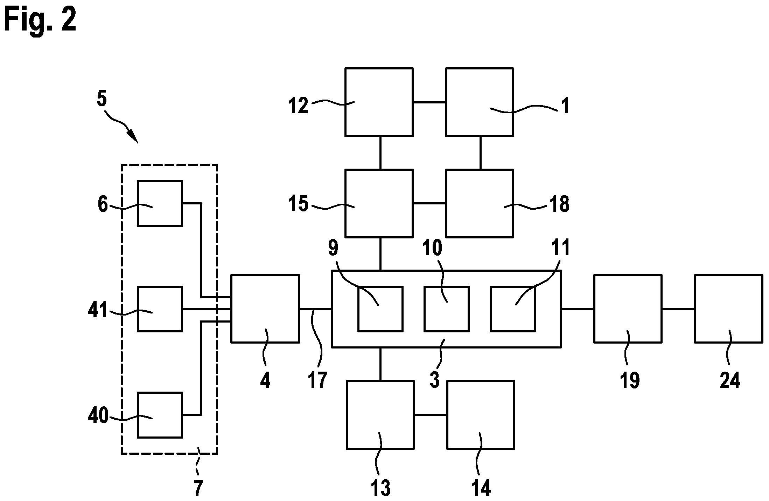

Fig. 1 zeigt eine Draufsicht auf ein fahrerloses, autonom agierendes Flurförderzeug 1 mit einem Steuerungssystem 3 und einer Detektoreinrichtung 5 (siehe Fig. 2).

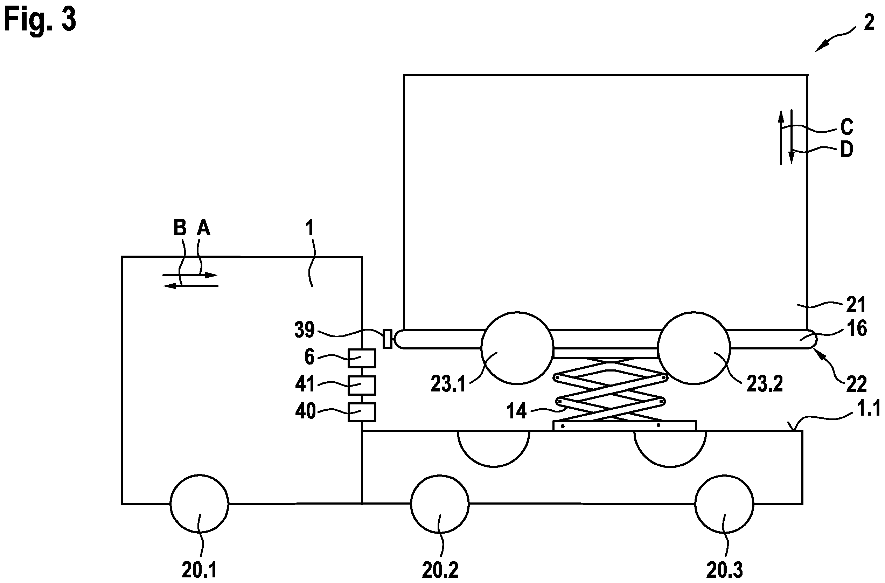

Das hier vorgestellte Flurförderzeug 1, das mit einer Last 2 (siehe Fig. 3) beladen ist, umfasst zumindest das Steuerungssystem 3, das das Flurförderzeug 1 steuert und lenkt und eine Auswerteeinheit 4 (siehe Fig. 2), die ein Signal zum Anhalten des Flurförderzeugs 1 erzeugt. Die Detektoreinrichtung 5 (siehe Fig. 2) umfasst einen Lastsensor 6 zur Erkennung der Anordnung der Last 2 sowie einen unteren Hubplattformsensor 40 und einen oberen Hubplattformsensor 41 zur Erkennung eines unerwünschten Absenkens der Hubplattform 16 einer Hub- und Absenkeinrichtung 14 (siehe Fig. 3). Das Steuerungssystem 3 umfasst eine erste Steuereinheit 9 für die gewünschte Fahrtrichtung und die Geschwindigkeit, eine zweite Steuereinheit 10 für die Bewegung und eine dritte Steuereinheit 11 für die Sicherheit des Flurförderzeugs 1. In der konkreten Anwendung sind zwei erste Motoren 12 für die Fahrbewegung des Flurförderzeugs 1 vorhanden, beide mit einem sicherem Drehzahlgeber 15 ausgestattet ("SIL 2" bezeichnet ein Sicherheitslevel und kann je nach Anforderung auch SIL1 oder 3 sein). Ein weiterer Motor 13 dient der Bewegung der Hub- und Absenkeinrichtung 14 (der Hubplattform), welcher durch induktive Erfassung der Ladeflächenposition überwacht wird (ohne Drehgeber). Am Heckende des Flurförderzeugs 1 ist ein Laserscanner 8 angeordnet, der einen Abladebereich 38 und die Last 2 überwacht.

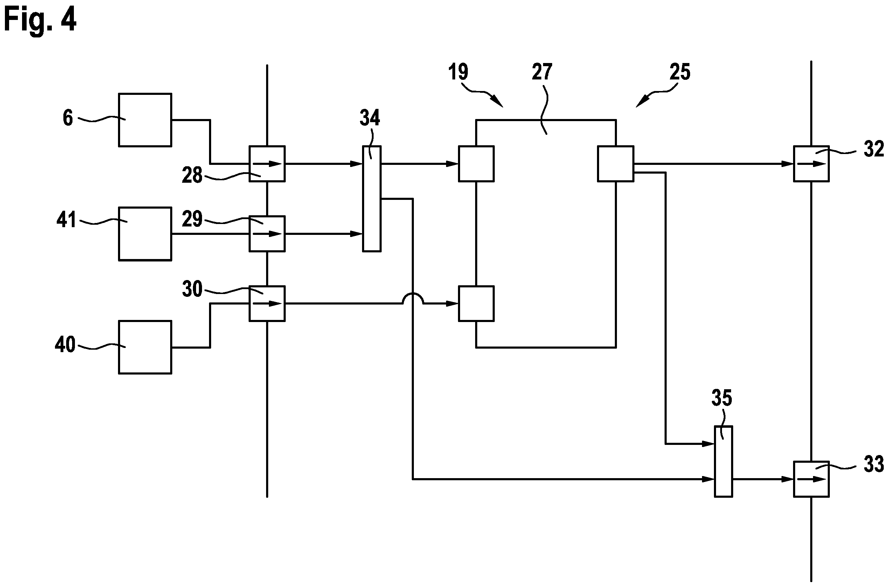

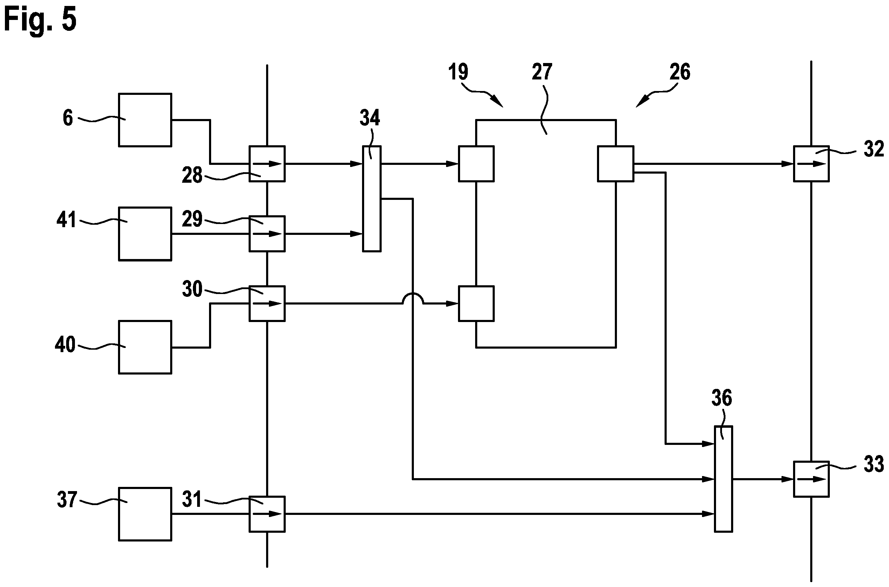

Fig. 2 veranschaulicht ein Blockschaltbild mit dem Steuerungssystem 3, an das die Detektoreinrichtung 5 angeschlossen ist. Der untere Hubplattformsensor 40, der obere Hubplattformsensor 41 und der Lastsensor 6 sind über die Auswerteeinheit 4 an das elektronische Steuerungssystem 3 durch eine datenleitende Verbindung 17 angeschlossen. Die zweite Steuereinheit 10 steht über Drehgeber 15 (Solldrehzahl) mit zwei ersten Motoren 12 für die Fahrzeugbewegung in Verbindung. Ein Bremssystem 18 ist an das Steuerungssystem 3 angeschlossen, das ein Signal an die ersten Motoren 12 zum Anhalten des Flurförderzeugs 1 erzeugen kann. Das Bremssystem 18 kann auch allein oder in Kombination mit den ersten Motoren 12 auf das Flurförderzeug 1 einwirken. Weiterhin ist ein zweiter Motor 13 für den Antrieb der Hub- und Absenkeinrichtung 14 an das Steuerungssystem 3 angeschlossen. Mit 19 ist als stromausfallsicherer Speicher ein Flipflop 27 (sh. Fig. 4 und 5) bezeichnet, das mit der Steuerung 3 verbunden ist. Eine Batterie 18 ist an das Flipflop 27 angeschlossen, um während eines Stromausfalls das Programm im Speicher 19 aufrechtzuerhalten.

Fig. 3 zeigt eine Seitenansicht auf das Flurförderzeug 1 gemäß Fig. 1 mit einer beladenen Last 2. Als Lastensensor 6 ist ein induktiver Näherungssensor, z. B. ein Sensor mit inhärenter Sicherheitsfunktion, vorhanden. Der Lastsensor 6 ist an der Rückseite der Ladefläche 1.1 des Flurförderzeugs 1 angeordnet und in Richtung der Last 2 ausgerichtet. Die Last 2 besteht hierbei aus einem Ladegut 21 und einem Transportwagen 22 (Dolly), mit dem das Ladegut 21 transportiert werden kann. Mit 20.1, 20.2 und 20.3 sind Räder des Flurförderzeugs 1 bezeichnet. Mit 23.1 und 23.2 sind Räder des Transportwagens 22 bezeichnet. Auf der Ladefläche 1.1 des Flurförderzeugs 1 ist die Hub- und Absenkeinrichtung 14 in Gestalt eines Scherenhubs installiert, an deren oberem Ende sich eine Hubplattform 16 befindet. Die Hubplattform 16 trägt den Transportwagen 22 mit dem Ladegut 21. Mit C und D sind die Bewegungsrichtungen der Hub- und Absenkeinrichtung 14, der Hubplattform 16, des Transportwagens 22 und des Ladeguts 21 in Höhenrichtung bezeichnet. An der Rückseite der Ladefläche 1.1. sind weiterhin übereinander der untere Hubplattformsensor 40 und der obere Hubplattformsensor 41 angebracht, die in Richtung der Hubplattform 16 ausgerichtet sind. An der Hubplattform 16 ist ein (leitendes) Eisenelement 39, z. B. eine Schraube, angebracht, das mit den induktiven Hubplattformsensoren 40 und 41 sowie mit dem Lastsensor 6 zusammenwirkt bzw. von diesen messtechnisch erfassbar ist.

Fig. 4 stellt ein Schaltbild für eine erste Ausführungsform einer Logikschaltung 25 dar.

Der Lastsensor 6, der obere Hubplattformsensor 41 und der untere Hubplattformsensor 40 sind an einen ersten Eingang 28, einen zweiten Eingang 29 bzw. einen dritten Eingang 30 angeschlossen. Die Eingänge 28 und 29 führen zu einem ersten UND-Gatter 34, denen ein Flipflop 27 und ein zweites UND-Gatter 35 nachgeordnet sind. Der dritte Eingang 30 steht mit dem Flipflop 27 in Verbindung. Dem Flipflop 27 sind ein erster Ausgang 32 und das zweite UND-Gatter 35 nachgeordnet.

Dem zweiten UND-Gatter 35 ist ein zweiter Ausgang 33 nachgeordnet. Die grundsätzliche Ablauflogik hierzu kann beispielhaft wie folgt zusammengefasst werden:
1. Die erste Steuereinheit 9 gibt die gewünschte Fahrtrichtung und die Geschwindigkeit an die zweite Steuereinheit 10.
2. Die zweite Steuereinheit 10 gibt die gewünschte Fahrtrichtung weiter an die dritte Steuereinheit 11, berechnet die Solldrehzahlen und gibt diese an die Motoren.
3. Die dritte Steuereinheit 11 erkennt über den Lastsensor 6 (logisch 1) und den oberen Hubplattformsensor 41 (logisch 1), dass eine Last 2 aufgeladen wurde und speichert diesen Zustand in einem sicheren Flipflop 27.
4. Verrutscht während der Transportfahrt die Last 2 (Lastsensor = logisch 0) setzt die dritte Steuereinheit 11 über die zweite Steuereinheit 10 die Geschwindigkeit auf v = 0 mm/s. (Die Sollgeschwindigkeiten der dritten Steuereinheit 11 haben Vorrang vor den Wunschgeschwindigkeiten der ersten Steuereinheit 9).
5. Das Abladen der Last 2 erkennt die dritte Steuereinheit 11 über den unteren Hubplattformsensor 40 (logisch 1) und setzt das Flipflop 27 zurück.

Fig. 5 verdeutlicht ein Schaubild für eine zweite Ausführungsform einer Logikschaltung 26. Die Logikschaltung 26 entspricht weitgehend der Logikschaltung 25 gemäß Fig. 4, jedoch mit dem Unterschied, dass ein Rückstellelement 37 an einen vierten Eingang 31 angeschlossen ist, dem ein drittes UND-Gatter 36 nachgeordnet ist. Die grundsätzliche Ablauflogik hierzu kann beispielhaft wie folgt zusammengefasst werden:
1. Die erste Steuereinheit 9 gibt die gewünschte Fahrtrichtung und die Geschwindigkeit an die zweite Steuereinheit 10.
2. Die zweite Steuereinheit 10 gibt die gewünschte Fahrtrichtung weiter an die dritte Steuereinheit 11, berechnet die Solldrehzahl und gibt diese an die Motoren.
3. Die dritte Steuereinheit 11 erkennt über den Lastsensor 6 (logisch 1) und den oberen Hubplattformsensor 41 (logisch 1), dass eine Last 2 aufgeladen wurde und speichert diesen Zustand in einem sicheren Flipflop 27.
4. Sinkt während der Transportfahrt die Hubplattform 16 unerwartet ab (logisch 0), setzt die dritte Steuereinheit 11 über die zweite Steuereinheit 10 die Geschwindigkeit auf v = 0 mm/s. (Die Sollgeschwindigkeiten der dritten Steuereinheit 11 haben Vorrang vor dem den Wunschgeschwindigkeiten der ersten Steuereinheit 9).
5. Ein gesteuertes Absenken wird nach einer sicher überwachten Rückwärtsfahrt, z. B. durch einen Laserscanner 8, in einen Abladebereich 38 (siehe Fig. 1) freigegeben (Unload = logisch 1).

Das hier vorgestellte fahrerlose, autonom agierende Flurförderzeug 1 (AGV) findet bevorzugt Anwendung zum Beispiel in Fabriken, Lagerhallen, Supermärkten oder Krankenhäusern. Aufgrund von Sensoren, zum Beispiel Laserscanner, induktive Näherungssensoren, Ultraschallsensoren und/oder 3D-Kameras, werden Kollisionen (insbesondere mit einer Person und/oder einem Gegenstand) und/oder Orientierungslosigkeit vermieden. Transportiert werden beispielsweise Paletten, Kisten, Regale, Einzelteile oder Kleinladungsträger (KLTs) mit oder ohne Transportwagen (Dolly).

### Bezugszeichenliste

- 1: Flurförderzeug
- 1.1: Ladefläche
- 2.: Last
- 3: Steuerungssystem
- 4: Auswerteeinheit
- 5: Detektoreinrichtung
- 6: Lastsensor
- 7: Sensorsystem
- 8: Laserscanner
- 9: erste Steuereinheit
- 10: zweite Steuereinheit
- 11.: dritte Steuereinheit
- 12.: erster Motor
- 13: zweiter Motor
- 14: Hub- und Absenkeinrichtung
- 15: Drehgeber
- 16: Hubplattform
- 17: datenleitende Verbindung
- 18: Bremssystem
- 19: Speicher
- 20.1, 20.2, 20.3: Räder des Flurförderzeugs
- 21: Ladegut
- 22: Transportwagen
- 23.1, 23.2: Räder des Transportwagens
- 24: Batterie
- 25: erste Logikschaltung
- 26: zweite Logikschaltung
- 27: Flipflop
- 28: erster Eingang
- 29: zweiter Eingang
- 30: dritter Eingang
- 31: vierter Eingang
- 32: erster Ausgang
- 33: zweiter Ausgang
- 34: erstes UND-Gatter
- 35: zweites UND-Gatter
- 36: drittes UND-Gatter
- 37: Rücksetzelement
- 38: Abladebereich
- 39: Eisenelement
- 40: unterer Hubplattformsensor
- 41: oberer Hubplattformsensor
- A, B, C, D: Bewegungsrichtungen

## Patentansprüche

1. Flurförderzeug (1), eingerichtet für den fahrerlosen, autonom agierenden Betrieb für eine zu transportierende Last (2), umfassend zumindest:
- ein Steuerungssystem (3), das das Flurförderzeug (1) steuert und lenkt,
- eine Auswerteeinheit (4), die ein Signal zum Anhalten des Flurförderzeugs (1) erzeugt,
wobei eine Detektoreinrichtung (5) zur Erkennung der Anordnung der Last (2) und/oder einer Hubplattform (16) an das Steuerungssystem (3) angeschlossen ist,
**dadurch gekennzeichnet, dass**
bei einer Abweichung der erkannten von einer vorgegebenen Anordnung der Last (2) und/oder bei einem unerwarteten Absenken der Hubplattform (16) das Anhalten des Flurförderzeugs (1) automatisch erfolgt.

2. Flurförderzeug (1) nach Patentanspruch 1, wobei das Steuerungssystem (3) eine erste Steuereinheit (9) für die gewünschte Fahrtrichtung und die Geschwindigkeit, eine zweite Steuereinheit (10) für die Bewegung und eine dritte Steuereinheit (11) für die Sicherheit des Flurförderfahrzeugs (1) umfasst, wobei die erste Steuereinheit (9) eine gewünschte Fahrtrichtung und eine Geschwindigkeit an die zweite Steuereinheit (10) gibt, wobei die zweite Steuereinheit (10) die gewünschte Fahrtrichtung weiter an die dritte Steuereinheit (11) gibt, eine Solldrehzahl berechnet und diese an Motoren bestimmt für die Bewegung des Flurförderfahrzeugs (1) weitergibt..

3. Flurförderzeug (1) nach Patentanspruch 1 oder 2, wobei das Steuerungssystem (3) mindestens einen stromausfallsicheren Speicher (19) zum Speichern der erkannten Anordnung der Last (2) und/oder der Hubplattform (16) umfasst.

4. Flurförderzeug (1) nach Patentanspruch 3, wobei der Speicher (19) ein Flipflop (27) ist.

5. Flurförderzeug (1) nach Patentanspruch 4, wobei das Flipflop (27) eingerichtet ist, beim Beladevorgang des Flurförderzeugs (1) die Anordnung der Last (2) und/oder der Hubplattform (16) zu speichern.

6. Flurförderzeug (1) nach einem der vorhergehenden Patentansprüche 4 oder 5, wobei das Flipflop (27) eingerichtet ist, bei Wiederinbetriebnahme nach Stromausfall die Anordnung der Last (2) und/oder der Hubplattform (16) direkt wieder zu speichern und den Transportvorgang automatisch weiterzuführen.

7. Flurförderzeug (1) nach einem der vorhergehenden Patentansprüche, wobei die Detektoreinrichtung (5) einen unteren Hubplattformsensor (40) und einen oberen Hubplattformsensor (41) umfasst.

8. Flurförderzeug (1) nach Patentanspruch 7, wobei der untere Hubplattformsensor (40) und obere Hubplattformsensor (41) an eine dritte Steuereinheit (11) angeschlossen sind.

9. Flurförderzeug (1) nach einem der vorhergehenden Patentansprüche, wobei ein Lastsensor (6) zur Erkennung der Anordnung der Last (2) vorgesehen ist und dieser ein induktiver Näherungssensor ist.

10. Flurförderzeug (1) nach einem der vorhergehenden Patentansprüche, wobei die Auswerteeinheit (4) in das Steuerungssystem (3) integriert ist.

## Claims

1. Automated guided vehicle (1) configured for driverless, autonomously acting operation for a load (2) to be transported, comprising at least:
- a control system (3) which controls and steers the automated guided vehicle (1),
- an evaluation unit (4) which generates a signal for stopping the automated guided vehicle (1),
wherein a detector device (5) for detecting the arrangement of the load (2) and/or of a lifting platform (16) is connected to the control system (3),
**characterized in that**
the automated guided vehicle (1) is stopped automatically when the detected arrangement of the load (2) deviates from a predefined arrangement of the load (2) and/or in the event of an expected lowering of the lifting platform (16) .

2. Automated guided vehicle (1) according to Patent Claim 1, wherein the control system (3) comprises a first control unit (9) for the desired direction of travel and the speed, a second control unit (10) for the motion and a third control unit (11) for the safety of the automated guided vehicle (1), wherein the first control unit (9) transmits a desired direction of travel and a speed to the second control unit (10), wherein the second control unit (10) passes on the desired direction of travel to the third control unit (11), calculates a setpoint rotational speed and forwards it to motors for the movement of the automated guided vehicle (1).

3. Automated guided vehicle (1) according to Patent Claim 1 or 2, wherein the control system (3) comprises at least one memory (19) protected against power failure, for storing the detected arrangement of the load (2) and/or of the lifting platform (16).

4. Automated guided vehicle (1) according to Patent Claim 3, wherein the memory (19) is a flip flop (27).

5. Automated guided vehicle (1) according to Patent Claim 4, wherein the flip flop (27) is configured to store the arrangement of the load (2) and/or of the lifting platform (16) during the loading process of the automated guided vehicle (1).

6. Automated guided vehicle (1) according to either of the preceding Patent Claims 4 and 5, wherein the flip flop (27) is configured, when re-activation occurs after a power failure, to directly store again the arrangement of the load (2) and/or of the lifting platform (16) and to continue the transportation process automatically.

7. Automated guided vehicle (1) according to one of the preceding patent claims, wherein the detector device (5) comprises a lower lifting platform sensor (40) and an upper lifting platform sensor (41).

8. Automated guided vehicle (1) according to Patent Claim 7, wherein the lower lifting platform sensor (40) and the upper lifting platform sensor (41) are connected to a third control unit (11).

9. Automated guided vehicle (1) according to one of the preceding patent claims, wherein a load sensor (6) is provided for detecting the arrangement of the load (2) and said load sensor (6) is an inductive proximity sensor.

10. Automated guided vehicle (1) according to one of the preceding patent claims, wherein the evaluation unit (4) is integrated into the control system (3).

## Revendications

1. Chariot de manutention (1), conçu pour un fonctionnement sans conducteur, à action autonome, pour une charge (2) à transporter, comprenant au moins :
- un système de commande (3) qui commande et dirige le chariot de manutention (1),
- une unité d'évaluation (4) qui génère un signal pour arrêter le chariot de manutention (1),
dans lequel un dispositif de détection (5) pour identifier l'agencement de la charge (2) et/ou une plateforme de levage (16) est connecté au système de commande (3),
**caractérisé en ce qu'**en
cas d'écart de l'agencement identifié par rapport à un agencement prédéfini de la charge (2) et/ou en cas d'abaissement imprévu de la plateforme de levage (16), l'arrêt du chariot de manutention (1) est effectué automatiquement.

2. Chariot de manutention (1) selon la revendication 1, dans lequel le système de commande (3) comprend une première unité de commande (9) pour le sens de la marche et la vitesse souhaités, une deuxième unité de commande (10) pour le déplacement, et une troisième unité de commande (11) pour la sécurité du chariot de manutention (1), dans lequel la première unité de commande (9) transmet un sens de la marche et une vitesse souhaités à la deuxième unité de commande (10), dans lequel la deuxième unité de commande (10) retransmet le sens de la marche souhaité à la troisième unité de commande (11), calcule une vitesse de rotation de consigne et les retransmet à des moteurs destinés au déplacement du chariot de manutention (1).

3. Chariot de manutention (1) selon la revendication 1 ou 2, dans lequel le système de commande (3) comprend au moins une mémoire (19) protégée contre les coupures de courant pour mémoriser l'agencement identifié de la charge (2) et/ou de la plateforme de levage (16).

4. Chariot de manutention (1) selon la revendication 3, dans lequel la mémoire (19) est une bascule bistable (27) .

5. Chariot de manutention (1) selon la revendication 4, dans lequel la bascule bistable (27) est conçue pour mémoriser lors du processus de chargement du chariot de manutention (1) l'agencement de la charge (2) et/ou de la plateforme de levage (16).

6. Chariot de manutention (1) selon l'une quelconque des revendications précédentes 4 ou 5, dans lequel, en cas de remise en service après une coupure de courant, la bascule bistable (27) est conçue pour remémoriser immédiatement l'agencement de la charge (2) et/ou de la plateforme de levage (16) et pour continuer automatiquement le processus de transport.

7. Chariot de manutention (1) selon l'une quelconque des revendications précédentes, dans lequel le dispositif de détection (5) comprend un capteur de plateforme de levage inférieur (40) et un capteur de plateforme de levage supérieur (41).

8. Chariot de manutention (1) selon la revendication 7, dans lequel le capteur de plateforme de levage inférieur (40) et le capteur de plateforme de levage supérieur (41) sont connectés à une troisième unité de commande (11).

9. Chariot de manutention (1) selon l'une quelconque des revendications précédentes, dans lequel un capteur de charge (6) est prévu pour identifier l'agencement de la charge (2) et celui-ci est un capteur de proximité inductif.

10. Chariot de manutention (1) selon l'une quelconque des revendications précédentes, dans lequel l'unité d'évaluation (4) est intégrée dans le système de commande (3) .
